# EUROPEAN PATENT APPLICATION

(11) **EP 2 550 858 A1**
(43) Date of publication of application: **30.01.2013**
(21) Application number: 11758856.6
(22) Date of filing: 23.03.2011
(51) Int. Cl.: A01G 27/00

(54) **SOAKER AND/OR DRIP IRRIGATION DEVICE SUITABLE FOR PLANT POTS AND OUTDOOR SOIL PLANTING**

(30) Priority: 24.03.2010 ES 201000303 U
(71) Applicant: Bandim Activities, S.L., 08184 Palau-Solitá Plegamans {Barcelona) (ES); Potas Paredes, Francisco, 08291 Ripollet (Barcelona) (ES); Michel Camps, Carles, 08036 Barcelona (ES)
(72) Inventor: PRIMO DELGADO, Amador, E-47008 Valladoid (ES); OLLER OLLER, Georgina, E- 08130 Sta. Perpetua de Mogoda (Barcelona) (ES); OLLER OLLER, Roger, E-08130 Sta. Perpetua de Mogoda (Barcelona) (ES)
(74) Representative: ZBM Patents
(86) International application number: PCT/ES2011/000090
(87) International publication number: WO 2011/117442

(57) **Abstract**

The invention comprises a container (2) that is inserted into soil. The upper part of the container is provided with water supply means (3) and elements (14) for defining the shape of the container, while the lower part thereof is provided with means (15) for continuously releasing microdrops of water into the earth. The container has a tubular structure, is made from a flexible material and includes water supply means, water content indicating elements and air release elements (17).

## Description

### OBJECT OF THE INVENTION

The present invention relates to a soaker and/or drip irrigation device suitable for plant pots and outdoor soil planting.

### FIELD OF THE INVENTION

It is that of the construction and use of plant pots, planters and the like, and open spaces, intended to contain ornamental plants to be used indoors, and/or outdoors.

### BACKGROUND OF THE INVENTION

In most currently known plant pots and planters, when it is desired to have a reserve of water in anticipation of a more or less extended period of time without watering, a quantity of water is placed in the bottom part of the container with the purpose of soaking the soil mass contained therein. However, in practice this effect is achieved only partially, whereby wetting of the soil and hence that of the roots of the plants occurs from bottom to top, in an irregular and unsatisfactory manner.

It was therefore desirable to have a practically automatic, long-acting irrigation system, which operates from top to bottom, with 100 per cent without risk of evaporation by heat and which is adjustable.

### BRIEF DESCRIPTION OF THE INVENTION

In order to achieve the above objects the irrigation device object of this utility model has been designed, which is suitable for all kinds of plant pots or outdoor soil, keeps plants watered between each watering relatively separated in time, allows additives to be applied to plants and adapts to different types thereof. Delivery of water to the soil around the roots is performed by irrigation and/or soaking and therefore with an extremely long acting ability.

For ease of explanation, the present description is accompanied by drawings in which one embodiment of a soaker and/or drip irrigation device suitable for plant pots and outdoor soil planting according to the principles of the claims has been shown by way of an illustrative and non-limiting example.

### BRIEF DESCRIPTION OF THE DRAWINGS

Figure 1 shows, through six elementary drawings, the constitution of the irrigation device object of the present invention.
Figure 2 is a perspective view of a preferred embodiment of the new irrigation device, essentially defined by a reservoir formed by one or more two curvilinear tubular elements coupled by their ends.
Figure 3 shows two tubular elements in a rectilinear arrangement and separated.

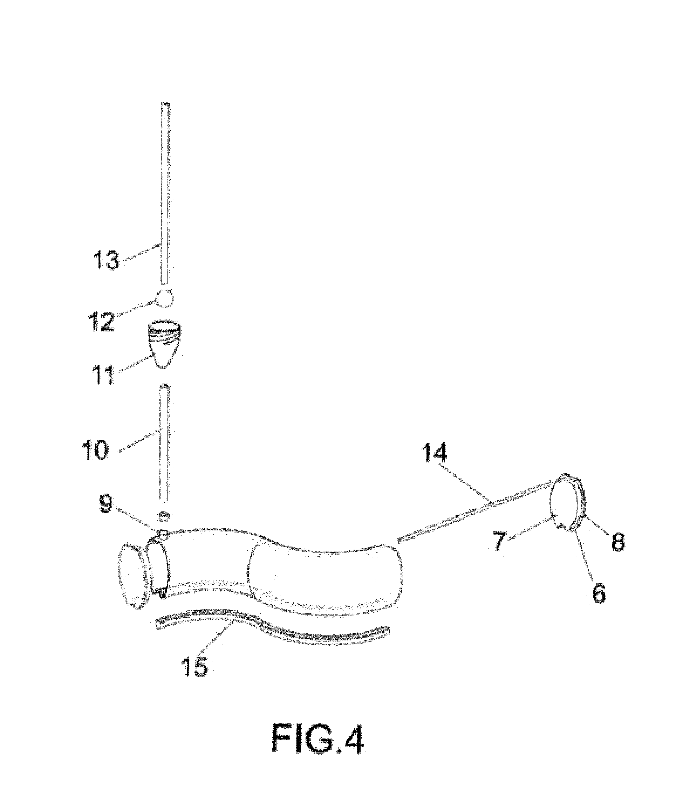

Figure 4 is a perspective view of one of the tubular elements, doubly curved, and one component associated therewith for introducing water.
Figures 5 and 8 show the two elements of figure 3 in a rectilinear arrangement and coupled.
Figures 6 and 7 show a plan view of the tubular element of figure 4.
Figure 9 is a plan view of the device in figure 2 with two tubular elements coupled in a circle.
Figures 10 and 11 depict sections of the new device through two vertical planes in their full and empty states, respectively.

### DETAILED DESCRIPTION OF THE INVENTION

The elements designated with reference numerals in the drawings correspond to the parts indicated below.

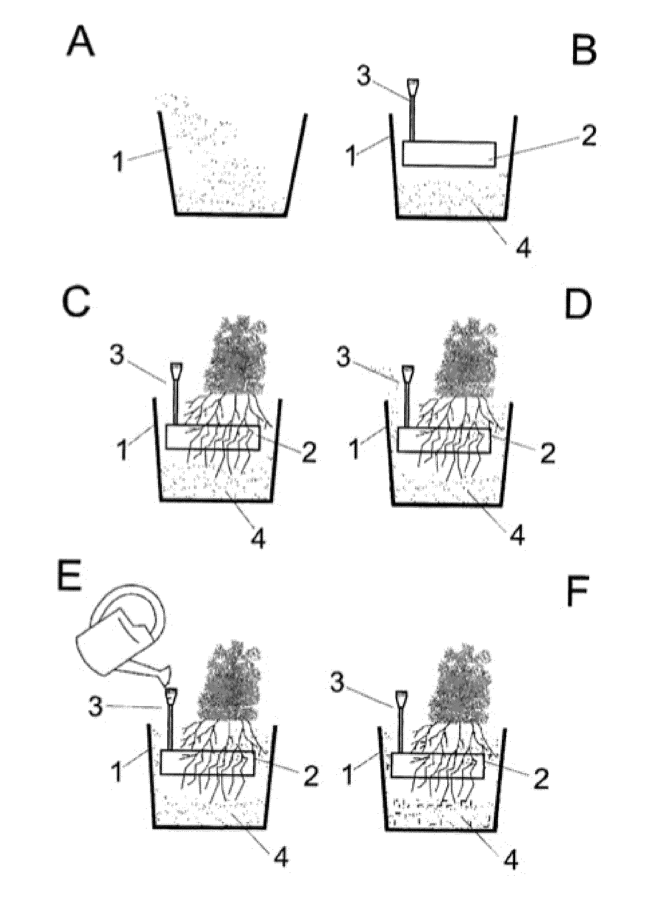

The device herein described, installed in a plant pot 1, consists of a container body or reservoir 2 inside of which a certain amount of water is introduced, preferably by means of a component 3 (according to figure 1 E). Water passes from the body 2 to soil mass 4 of the plant pot through a soaker and/or drip irrigation system, that is, continuously and with a very small flow (droplets), ensuring permanent soil moisture.

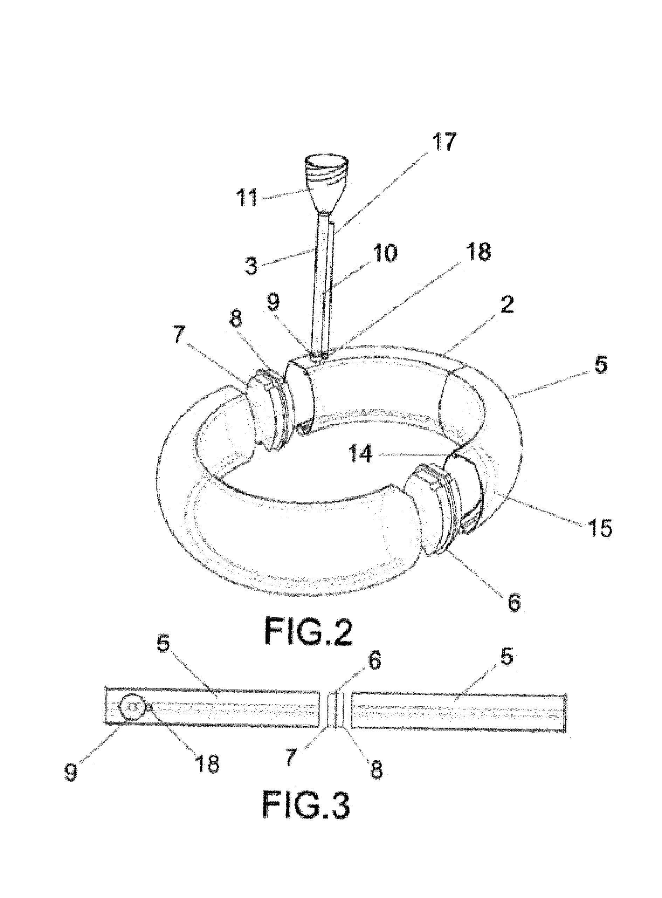

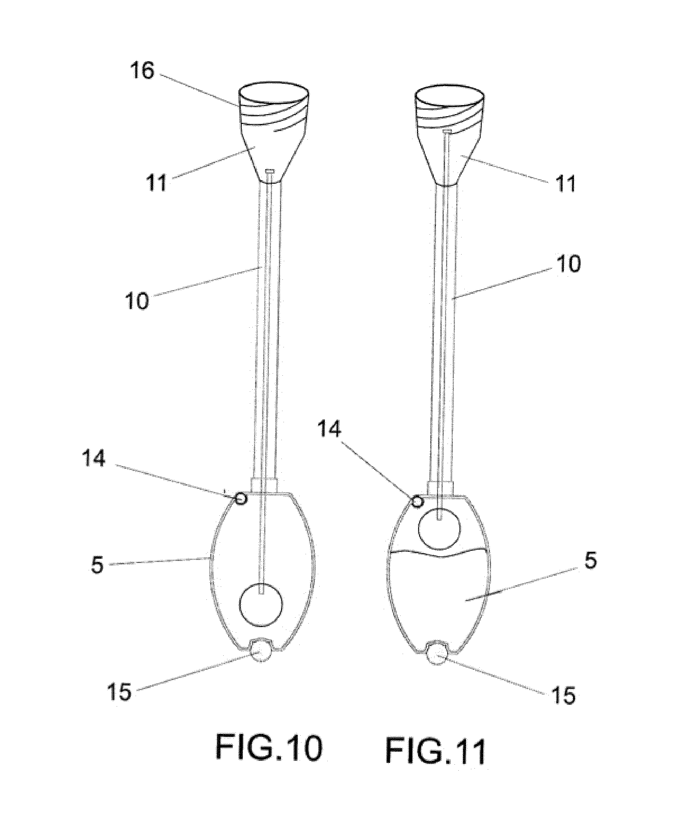

The body 2 (figure 2) is preferably formed by at least one tubular piece 5, having advantageously an elliptical cross-section or the like, as shown in figures 10 and 11, made of a flexible material such as rubber or plastic or semi rigid.

In the embodiment shown in figure 2 two associated tubular elements 5 are shown forming a ring and coupled by their ends through connecting pieces 6 having the same elliptical shape and each having extensions 7 and 8 with the same shape and size as the inside of the elements 5.

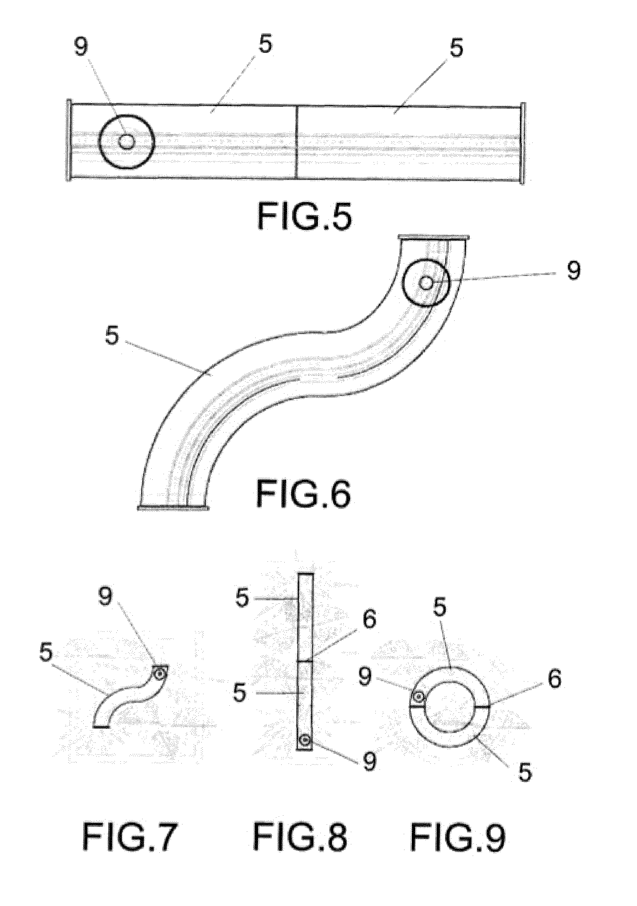

In the embodiments of figures 5 and 8 the two elements 5 are coupled in a rectilinear arrangement.

Instead of the two elements 5 in figure 2 only one (as in figure 7) or more than two elements may be used for convenience depending on the size of the plant pot or planter where the continuous watering device is to be installed.

One of the elements 5 has an opening 9 at the upper part thereof for receiving the coupling of an irrigation tube 10 with which a levelling funnel 11 is associated, a floating weight 12 therein and a levelling bar 13 indicative of the amount of existing water in the reservoir 2. This assembly 3 is used for controlled loading of the device with water, according to figure 1 E, as well as for dosing additives for the plants.

Optionally, the irrigation tube head 10 may be provided with a thread suitable for threadably coupling a bottle (upside down) with water, to ensure a continuous supply of liquid for an extended period of time.

One of the elements 5 has an opening 9 at the upper part thereof for receiving a mouth 18 intended to receive the coupling of a tube 17 for releasing air from the container body or reservoir 2, to facilitate the entry of water through the irrigation tube 10. This air releasing pipe 17 may be either annexed to the irrigation tube 10 or arranged at any other point of the upper part of the element 5.

The upper part of each element 5 comprises a flexible, malleable shaping rod 14 which will allow the irrigation reservoir or body 2 to be properly shaped for being placed in the soil mass 4.

The bottom part of each element 5 comprises a longitudinal slot in which a strip 15 of a porous material is provided, through which droplets forming soaking and/or drip irrigation that defines the essence of the present invention will pass.

## Claims

1. Soaker and/or drip irrigation device suitable for plant pots and outdoor soil, **characterized in that** it comprises a reservoir (2) inserted into the soil mass (4) of a plant pot, provided at its upper part with means (3) for loading of water and means (14) for defining the shape of the reservoir and at its bottom part with means (15) for the continuous outflow of water in the form of droplets to the soil mass (4).

2. Drip irrigation device as claimed in claim 1, wherein the container (2) is provided on at least one tubular element (5) made preferably of a flexible material, provided at its ends with pieces (8) for closing and/or coupling with other identical tubular elements together in a configuration in the form of a ring.

3. Drip irrigation device as claimed in claim 1, wherein the means (3) for loading of water comprise a mouth (9) in the upper part of the reservoir (2), an irrigation tube (10), a levelling funnel (11), a floating weight (12), a levelling bar (13) indicative of the amount of water, a mouth (18) in the upper part of the reservoir (2) and an air releasing pipe (17).

4. Drip irrigation device as claimed in claim 1, wherein the means (14) for defining the shape of the reservoir (2) consist of a semi rigid rod (13) integral with the upper part of each of the tubular elements (5).

5. Drip irrigation device as claimed in claim 1, wherein the means for continuous release of water from the reservoir (2) in the form of droplets into the soil mass (4) consist of a strip (15) made of a porous material located in the bottom part of each of the tubular elements (5).

## Amended claims

### Amended claims under Art. 19.1 PCT

1. Soaker and/or drip irrigation device suitable for plant pots and outdoor soil, **characterized in that** it comprises means (14) for defining the shape of the reservoir and at its bottom part with means (15) for the continuous outflow of water in the form of droplets to the soil mass (4).

2. Drip irrigation device as claimed in claim 1, wherein the container (2) comprises at least one tubular element (5) made preferably of a flexible material, provided at its ends with pieces (8) for closing and/or coupling with other identical tubular elements.

3. Drip irrigation device as claimed in claim 1, wherein the means (3) for loading of water comprise a levelling funnel (11), a floating weight (12), a levelling bar (13) indicative of the amount of water, a mouth (18) in the upper part of the reservoir (2) and an air releasing pipe (17).

4. Drip irrigation device as claimed in claim 1, wherein the means (14) for defining the shape of the reservoir (2) consist of a semi rigid rod (14) integral with the upper part of each of the tubular elements (5).

5. Drip irrigation device as claimed in claim 1, wherein the means for continuous release of water from the reservoir (2) in the form of droplets into the soil mass (4) consist of a strip (15) made of a porous material located in the bottom of each of the tubular elements (5).
